# NEUE EUROPÄISCHE PATENTSCHRIFT

(11) **EP 1 508 436 B3**
(45) Veröffentlichungstag dieser Patentschrift: **12.03.2014**
(45) Hinweis auf die Patenterteilung: 02.08.2006
(21) Anmeldenummer: 04011799.6
(22) Anmeldetag: 18.05.2004
(51) Int. Cl.: B32B 3/02, C09J 7/04, E04F 13/04, B65H 35/00

(54) **Montageband mit abschnittsweiser abdeckfolie**
Adhesive mounting tape with stepwise removable cover film
Ruban adhésif de montage avec un film protecteur détachable par plusiers étapes

(30) Priorität: 18.08.2003 DE 10337878
(43) Veröffentlichungstag der Anmeldung: 23.02.2005
(73) Patentinhaber: Silu Verwaltung AG, 6045 Meggen (CH)
(72) Erfinder: Sieber, Marco, 6048 Horw (CH); Sieber, Reto, 6019 Sigigen (CH)
(74) Vertreter: Altenburg, Udo

(56) Entgegenhaltungen:
- EP-A- 1 279 695
- WO-A-02/00802
- WO-A-99/48618
- DE-U- 20 022 503
- PATENT ABSTRACTS OF JAPAN Bd. 1997, Nr. 03, 31. März 1997 (1997-03-31) & JP 8 311417 A (NITTO DENKO CORP), 26. November 1996 (1996-11-26)

## Beschreibung

Die Erfindung betrifft ein selbstklebendes Band zum Verschließen, Abdichten und Verkleben von Fugen, insbesondere im Hausbau, und insbesondere von Fugen in Ecken und Kanten, ein sogenanntes Montageband, mit einer Trägerschicht an der Bandoberseite, einer Haftkleberbeschichtung der Trägerschicht an der Bandunterseite und mit einer abziehbaren Abdeckfolie an der Bandunterseite.

Allgemein finden solche Klebebänder z.B. Anwendung, wenn im Hausbau verschiedene Bauelemente, wie Türen oder Fenster, in eine Wandöffnung eingesetzt werden und die dabei zwischen den Bauelementen und der entsprechenden Wandöffnung entstehende Fuge verschlossen wird, was speziell beim Einbau solcher Bauelemente in Gebäudeaußenwände erfolgen muss, um eine entsprechende Dichtwirkung zu erzielen.

Ein generelles Problem solcher selbstklebender Bänder ist, in schwer zugänglichen Bereichen bei möglichst unkomplizierter Anwendung dennoch eine gute Abdichtwirkung durch korrekte Anbringung solcher Bänder zu erzielen, um ein möglichst luft- bzw. feuchtigkeitsdichtes Verschließen der Fugen zu erreichen.

Die deutsche Offenlegungsschrift DE 101 35 799 A1 derselben Anmelderin zeigt ein Montageklebeband zur verbesserten Fugenabdichtung mit einem geeigneten Montageband-Dispenser, wobei das entsprechende Montageband auf der Bandunterseite eine auf einer Trägerschicht auf einer Bandoberseite vorgesehene Klebeschicht aufweist, welche mit einer abziehbaren Deckfolie an der Bandunterseite versehen ist. Die Deckfolie weist in Längsrichtung des Bandes verlaufend einen Schlitz auf und das Band ist entlang dieses Schlitzes in Querrichtung einmal so auf sich selbst gefaltet, dass mindestens ein Teil der Deckfolie außen, d.h. an der Bandoberseite liegt. Ferner weist dieses Band mindestens einen seitlichen Längsabschnitt auf, welcher perforiert ist. Um beim Transport und der Anwendung das auf Grund der Deckfolienabdeckung relativ leicht in sich verrutschende Montageklebeband in aufgerollter Form sicher handhaben zu können, ist ein spezieller Montageband-Dispenser zur Aufnahme und Ausgabe des Montageklebebandes vorgesehen. Die einzelne Umfaltung des Montageklebebandes entlang eines Schlitzes der Deckfolie erlaubt es, dass das bekannte Montageklebeband auch in schwer zugänglichen Bereichen effektiv verklebbar ist. Durch die einfache Umfaltung entlang eines Schlitzes ist zwar eine zuverlässige Verarbeitbarkeit gegeben, jedoch muss bei der Verarbeitung immer zunächst entlang des Schlitzes der Faltungskante die Abdeckfolie vor der eigentlichen Anbringung des genannten Montageklebebandes entfernt werden. Auch kann es in bestimmten Anwendungsfällen, insbesondere bei sehr beengten räumlichen Verhältnissen, wünschenswert sein, die Handhabbarkeit noch weiter zu optimieren.

Der Erfindung liegt die Aufgabe zu Grunde, ein selbstklebendes Band zum Verschließen, Abdichten und Verkleben von Fugen, insbesondere im Hausbau, und insbesondere von Fugen in Ecken und Kanten, vorzusehen, welches die Nachteile des Standes der Technik überwindet und insbesondere trotz einfacher und somit kostengünstiger Gestaltung eine optimale Dichtwirkung bei gleichzeitig weiter verbesserter Handhabbarkeit, insbesondere unter räumlich schwierigen bzw. beengten Verhältnissen, vorsieht.

Diese Aufgabe mit einem selbstklebenden Band gemäß Anspruch 1 gelöst.

Vorteilhafte Ausgestaltungen und Weiterbildungen sind in den Unteransprüchen definiert.

Das erfindungsgemäße selbstklebende Band zum Verschließen, Abdichten und Verkleben von Fugen, insbesondere im Hausbau, und insbesondere von Fugen in Ecken und Kanten, welche besonders schwer erreichbar sind, weist eine Trägerschicht an der Bandoberseite, eine Haftkleberbeschichtung der Trägerschicht an der Bandunterseite und eine abziehbare Abdeckfolie an der Bandunterseite auf. Gemäß der Erfindung ist zumindest ein erster Faltabschnitt des Bandes in Querrichtung entlang einer in Längsrichtung des Bandes verlaufenden ersten Faltungskante umgefaltet und zumindest ein Teil der Haftkleberbeschichtung entlang eines Längsabschnitts des Bandes ist nicht mit der Abdeckfolie abgedeckt.

Durch die erfindungsgemäße Kombination einer Umfaltung mit einem teilweise nicht durch die Abdeckfolie abgedeckten Bereich der Haftkleberbeschichtung ergibt sich eine erfindungsgemäß weiter verbesserte Verarbeitbarkeit des Bandes. So bietet einerseits die erfindungsgemäße Faltung, welche nicht entlang eines Schlitzes verlaufen muss, den Vorteil, dass unter beengten räumlichen Verhältnissen, insbesondere im Bereich von Ecken und Kanten, das Band sauber und faltenfrei, d.h. unter bestmöglicher Dichtwirkung, anbringbar ist. Zum zweiten muss entlang des mit der Abdeckfolie nicht abgedeckten Teil der Haftkleberbeschichtung entlang eines Längsabschnitts des erfindungsgemäßen Bandes dort diese Abdeckfolie während des Verlegevorgangs nicht erst mühsam entfernt werden, wodurch sich eine raschere Verarbeitbarkeit des erfindungsgemäßen Bandes ergibt. Auch wird dadurch verhindert, dass eventuell durch das sonst erforderliche Abziehen der Folie Verwerfungen und Falten im angeklebten Band auftreten. Auch erfordert ein solches erfindungsgemäß gestaltetes Band keinen zusätzlichen Montageband-Dispenser zur Aufnahme und Ausgabe des Bandes, da sich im gefalteten bzw. aufgerollten Zustand das erfindungsgemäße Band auf Grund seiner teilweise von Abdeckfolie freibleibenden Haftkleberbeschichtung nicht in sich verschieben wird. Das erfindungsgemäße Band ist somit besonders einfach und zuverlässig verwendbar. Auch kann das erfindungsgemäße Band somit ohne besonderen Verpackungsaufwand und Schutzaufwand durch den Verarbeiter zu den entsprechenden Anwendungsorten bzw. Baustellen transportiert werden.

Ein solches erfindungsgemäßes Band kann beispielsweise im Trockenausbau und/oder im Massivbau Verwendung finden. Insbesondere an räumlich schwer zugänglichen Stellen, wie 90°-Ecken, z.B. zwischen zwei aufeinander stoßenden Trockenausbauwänden, oder auch im Fensterbereich, wo das erfindungsgemäße Band möglichst genau an dem Fensterrahmen verklebbar ist, wird so das Risiko vermieden, dass beim späteren Verputzungsvorgang das Band durch einen Schlag der Verputzerkelle durchtrennt wird und somit dessen Luftdichtheit verloren geht. Die Vorfaltung. erspart dem Anwender dabei viel Zeit, insbesondere wenn größere Fensterflächen mit mehreren eingesetzten Fensterrahmen bei einem Hausneubau in die Außenwände einzusetzen sind. Ansonsten müssten die entsprechende Faltung von Hand erfolgen, dies ist erfindungsgemäß nicht erfordertich. Setzt man das erfindungsgemäße Klebeband im Holzbau ein, so reicht es dort, dass aufgrund der auftretenden schmaleren Fugenbreite zwischen aneinander grenzenden Bauelementen, nur einzelne Abschnitte des Dichtbandes zu verkleben, so dass durch entsprechende erfindungsgemäße Anordnung von einer geeigneten Schlitzung bzw. von geeigneten Schlitzungen eine sehr präzise und rasche Verarbeitbarkeit des erfindungsgemäßen Bandes ermöglicht wird.

GemäßeinerbevorzugtenAusführungsformist die Haftkleberbeschichtung des Bandes zumindest im Bereich des ersten Faltabschnitts nicht mit der Abdeckfolie abgedeckt. Das heißt, der umgefaltete Bereich des erfindungsgemäßen Bandes trägt bevorzugt keine Abdeckfolie. Somit kann dieser Bereich einfach unter beengten räumlichen Verhältnissen, beispielsweise in Kanten oder U-Profilen, ohne weitere Hilfsmittel und Arbeitsschritte, wie beispielsweise Abziehen der Abdeckfolie oder mühsames Umfalten, z.B. direkt von der Rolle abgerollt und angerieben werden, wodurch sich eine zuverlässige Abdichtwirkung bei weiter vereinfachter Verarbeitbarkeit ergibt. Diese einfache Form der Verarbeitung spart bis zur Hälfte der Arbeitszeit im Vergleich zur Verwendung von Bändern des bisherigen Standes der Technik.

Gemäß einer weiteren bevorzugten Ausführungsform kann das erfindungsgemäße Band einen zweiten Faltungsabschnitt aufweisen, welcher in Querrichtung entlang einer in Längsrichtung des Bandes verlaufenden zweiten Faltungskante umgefaltet ist. Das Vorsehen eines zweiten Faltungsabschnitts erlaubt eine sehr flexibleAnpassung an spezielle Geometrien derAbdichtung, so kann beispielsweise im Fugenbereich zwischen einem Fensterrahmen und dem umgebenden Mauerwerk, welches an den Fensterrahmen über Eck angrenzt, durch die Doppelfaltung einerseits eine einfache Anbringung des von Abdeckfolie freibleibenden Teils der Haftkleberbeschichtung des Bandes am Fensterrahmen erfolgen, während andererseits der zweite Faltungsabschnitt dann über Eck die Verbindung zum Mauerwerk ermöglicht.

Bevorzugt ist eine Ausführungsform der Erfindung, bei welcher die Abdeckfolie zumindest einen Schlitz in Längsrichtung des Bandes aufweist. Damit kann zusätzlich zu dem bereits abdeckfolienfreien Teil der Haftkleberbeschichtung des Bandes ein weiterer Teilbereich der entsprechend vorteilhaft gestalteten Abdeckfolie der Erfindung entlang des Schlitzes abgezogen werden, während ein weiterer Bereich der Abdeckfolie des erfindungsgemäßen Bandes an der Bandunterseite verbleiben kann.

Besonders vorteilhaft ist in diesem Zusammenhang eine Ausführungsform der Erfindung, bei welcher die zweite Faltungskante mit dem Schlitz der Abdeckfolie zusammenfällt, da somit die Abdeckfolie besonders leicht vom zweiten Faltungsabschnitt entfernt werden kann. Dadurch kann sich eine sichere Verklebung mit beispielsweise dem Mauerwerk ergeben.

Es kann jedoch auch bevorzugt sein, dass die zweite Faltungskantegemäßeinerweiteren bevorzugten Ausführungsform der Erfindung nicht mit dem Schlitz der Abdeckfolie zusammenfällt.

Nicht zusammenfallende Faltungskante(n) und Schlitz(e) können bevorzugt einen Abstand voneinander zum jeweiligen Nachbarn im Bereich von 1 mm bis 25 cm aufweisen.

Besonders bevorzugt ist eine Ausführungsform der Erfindung, bei welcher ein Randabschnitt der Abdeckfolie überdie erste Faltungskante und/oderdiezweite Faltungskante vorsteht. Auf diese Weise ergibt/ergeben sich ein bzw. zwei Angreifabschnitt(e), welche(r) die Entfernung der Abdeckfolie auf einfache Art und Weise durch Angreifen am genannten Randabschnitt ermöglicht/ermöglichen. Dies erleichtert die Handhabbarkeit der erfindungsgemäßen Selbstklebefolie noch zusätzlich. Der Abschnitt/die Abschnitte kann/können bevorzugt eine Breite im Bereich von 1 mm bis 1 cm aufweisen.

Je nach individueller Anwendungssituation können unterschiedliche Anordnungen der Faltabschnitte für eine Verarbeitbarkeit besonders vorteilhaft sein.

So kann gemäß einer bevorzugten Ausführungsform der Erfindung die Haftkleberbeschichtung im Bereich des zweiten Faltabschnitts ebenso wie im Bereich des ersten Faltabschnitts nicht mit der Abdeckfolie abgedeckt sein.

Der erste Faltabschnitt und der zweite Faltabschnitt können jeweils gegenüberliegende Randabschnitte des erfindungsgemäßen Bandes sein, es ist jedoch auch möglich, dass der erste Faltabschnitt und der zweite Faltabschnitt in Querrichtung des Bandes gesehen aneinander angrenzen. Auch können der erste Faltabschnitt und der zweite Faltabschnitt gemäß einer weiteren bevorzugten Ausführungsform im umgefalteten Zustand des Bandes zumindest teilweise aufeinanderliegen.

Gemäß einer weiteren bevorzugten Ausführungsform der Erfindung kann im Bereich des ersten Faltabschnitts und/oder im Bereich des zweiten Faltabschnitts Bandunterseite auf Bandunterseite aufeinanderliegen, es ist jedoch gemäß einer weiteren bevorzugten Ausführungsform auch möglich, dass im Bereich des ersten Faltabschnitts und/oderim Bereich des zweiten Faltabschnitts Bandoberseite auf Bandoberseite aufeinanderliegt.

Bevorzugt kann die jeweilige Breite des ersten und/oder zweiten Faltabschnitts oder die Breite der Faltabschnitte schmaler sein als die Breite des nicht umgefalteten Bandbereichs. Bevorzugt kann die jeweilige Breite des ersten und/oder zweiten Faltabschnitts oder die Breite der Faltabschnitte auch eine gleiche oder im wesentlichen gleiche Breite aufweisen wie die Breite des nicht umgefalteten Bandbereichs. Bevorzugt kann diejeweilige Breite des ersten und/oder zweiten Faltabschnitts oderdie Breite der Faltabschnitte auch eine größere Breite aufweisen wie die Breite des nicht umgefalteten Bandbereichs. Die jeweilige Breite des ersten und/oder zweiten Faltabschnitts oder die Breiteder Faltabschnitte kann bevorzugt mindestens 3 mm, bevorzugter mindestens 8 mm, noch bevorzugter mindestens 12 mm betragen und/ oder kann weiter bevorzugt der Breite des nicht umgefalteten Bandbereichs entsprechen und/oder kann noch weiter bevorzugt größer sein als die Breite des nicht umgefalteten Bandbereichs.

Um eine sichere Haftung des erfindungsgemäßen selbstklebenden Bandes auf unterschiedlichsten Materialien auch unter widrigen Witterungseinflüssen (Kälte, Feuchtigkeit) zu gewährleisten, und um unter allen Umständen eine möglichst zuverlässige Dichtwirkung des erfindungsgemäßen selbstklebenden Bandes zu erzielen, besteht die Trägerschicht gemäß einer bevorzugten Ausführungsform aus einem Material aus der Gruppe Papier, Kunststoff, Gewebe, Vlies oder einer Kombination zumindest zweier dieser Materialien, und besteht die Haftkleberbeschichtung aus zumindest einem Material der Gruppe selbstklebender Acrylatkleber, Kautschukkleber, Butylkleber, Hotmelt oder einer Kombination zumindest zweier dieser Kleber.

Die Verarbeitbarkeit des erfindungsgemäßen Bandes wird besonders erleichtert, falls das Band gemäß einer bevorzugten Ausführungsform so beschaffen ist, dass zumindest dessen Trägerschicht quer zur Längsrichtung des Bandes von Hand einreißbar ist. Bevorzugt kann auch die Abdeckfolie quer zur Längsrichtung des Bandes von Hand einreißbar sein. Somit kann ohne Werkzeugeinsatz ein Ablängen des Bandes bei der Verlegung auf einfache Art und Weise erfolgen.

Besonders leicht handhabbar ist das erfindungsgemäße selbstklebende Band gemäß einer bevorzugten Ausführungsform, bei welcher das Band in gefaltetem Zustand zu einer Klebeband-Rolle aufgerollt ist. Diese ist vor Ort während der Anwendung auch ohne zusätzlichen Dispenser besonders leicht handhabbar.

Gemäß einer bevorzugten Ausführungsform des erfindungsgemäßen Bandes ist mindestens an der Seite der ersten Faltungskante der Rolle eine Zwischenlage vorgesehen, durch welche gegebenenfalls ein Verkleben im Bereich der ersten Faltungskante vor der eigentlichen Anwendung des Bandes vermieden wird. Die Zwischenlage deckt im Bereich der ersten Faltungskante gegebenenfalls die dort freiliegende Haftkleberbeschichtung zuverlässig ab, so dass auch eine Schmutzansammlung bereits vor Anwendung des Bandes dort sicher vermieden wird. Die Verarbeitbarkeit des so vorteilhaft erfindungsgemäß gestalteten Bandes wird dadurch weiter verbessert.

Bevorzugt weist das erfindungsgemäße Band eine breite von mindestens 3 cm im nicht gefalteten Zustand auf, bevorzugter eine Breite im Bereich von 3 cm bis 50 cm, noch bevorzugter eine Breite im Bereich von 4 cm bis 30 cm und am meisten bevorzugt eine Breite im Bereich von 4,5 cm bis 20 cm. Diese Maße erlauben einerseits, auch etwas breitere Fugen sicher abzudichten, andererseits wird vermieden, dass durch übergroße Breite des erfindungsgemäßen Bandes dessen Handhabbarkeit erschwert wird und es somit zu Faltenbildung und damit zu Undichtheiten beim Verlegevorgang des erfindungsgemäßen Bandes kommt.

Gemäß einer weiteren bevorzugten Ausführungsform der Erfindung weist das Band zumindest einen Perforationsbereich mit Perforationsöffnungen auf, deren durchschnittlicher Durchmesser mindestens 3 mm beträgt. Mit einem derartigen selbstklebenden Band kann beispielsweise sichergestellt werden, dass der zumindest eine Perforationsbereich des Bandes überputzbar ist, wodurch sich eine besonders gute Verankerung ergibt, ohne die Abdichtwirkung des Bandes zu gefährden. Vorteilhafterweise kann der zumindest eine Perforationsbereich dabei an einem Randbereich des Bandes ausgestaltet sein, es ist jedoch auch möglich, beide Randbereiche des Bandes mit einem entsprechenden Perforationsbereich zu versehen. Insbesondere können die entsprechenden Randbereiche, welche als Perforationsbereiche ausgebildet sein können, auch den entsprechenden ersten und zweiten Faltabschnitten des Bandes entsprechen. Zumindest der Mittelstreifen des Bandes, welcher vorzugsweise nicht perforiert sein soll, sollte je nach Anwendungsfall jedoch breiter sein als die maximale Breite der abzudichtenden Fuge, um eine optimale Abdichtwirkung sicherzustellen. Dadurch, dass der perforierte Längsabschnitt des erfindungsgemäßen Bandes gemäß einer bevorzugten Ausführungsform sich an einem Randbereich des Bandes befindet und der Mittelstreifen unperforiert bleibt, wird verhindert, dass die Perforationsöffnungen zu Undichtheiten führen, wenn die abzudichtende Fuge mit dem entsprechend gestalteten selbstklebenden Band abgedeckt wird.

Nach einer weiteren vorteilhaften Ausgestaltung der Erfindung sind die Trägerschicht, die Haftkleberbeschichtung und die abziehbare Abdeckfolie mit entsprechend durchgehenden Perforationsöffnungen perforiert. Solche Perforationstiffnungen sind kostengünstig durch entsprechende Ausstanzungen besonders einfach herstellbar, was zu günstigen Herstellungskosten führt. Generell verhindert die Abdeckfolie bzw. die Trägerschicht dabei, dass ein Perforationswerkzeug mit der Kleberschicht des selbstklebenden Bandes in Berührung kommt. Es ist jedoch generell auch möglich, dass des Klebebandes mit Perforationsöffnungen in dem Bereich versehen ist, welcher nicht mit der Abdeckfolie abgedeckt ist.

Bevorzugt können die Perforationsöffnungen im Wesentlichen rund, eckig oder oval ausgebildet sein.

Gemäß einer weiteren bevorzugten Ausführungsform der Erfindung kann die Trägerschicht aus einem solchen, insbesondere offenporigen Material bestehen, welches eine gute Hafteigenschaft für Mauerputz aufweist. Die Haftwirkung des Bandes auf Putzuntergrund wird damit zusätzlich verbessert und ein Ablösen von Teilen des Mauerputzes vom so gestalteten Band wird sicher vermieden.

Die Erfindung wird im Folgenden anhand der in der Zeichnung beispielhaft beschriebenenAusführungsformen der Erfindung detailliert beschrieben werden. Es zeigt:
- Fig. 1: eine erste Ausführungsform eines Bandes der Erfindung in einer Schnittansicht in Querrichtung des Bandes.
- Fig. 2: eine zweite bevorzugte Ausführungsform des erfindungsgemäßen Bandes in Schnittansicht in Querrichtung des Bandes.
- Fig. 3: eine dritte bevorzugte Ausführungsform des erfindungsgemäßen Bandes in Schnittansicht in Querrichtung des Bandes.
- Fig. 4: eine vierte bevorzugte Ausführungsform des erfindungsgemäßen Bandes in Schnittansicht in Querrichtung des Bandes.
- Fig. 5: eine fünfte bevorzugte Ausführungsform des erfindungsgemäßen Bandes in Schnittansicht in Querrichtung des Bandes.
- Fig. 6: eine sechste bevorzugte Ausführungsform des erfindungsgemäßen Bandes in Schnittansicht in Querrichtung des Bandes.

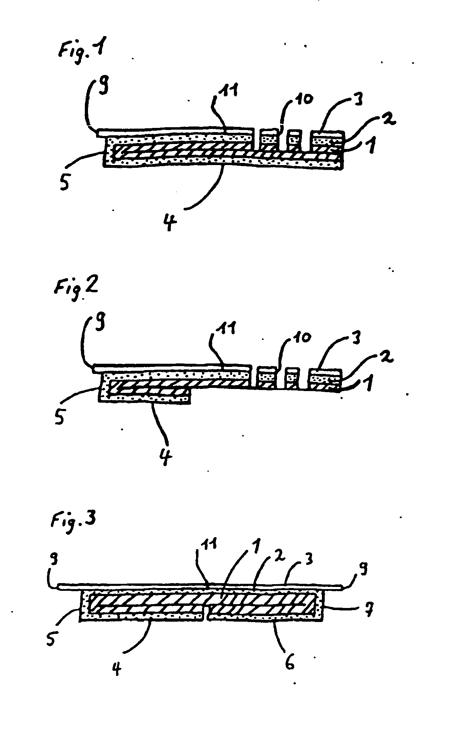

Figur 1 zeigt eine erste bevorzugte Ausführungsform eines selbstklebenden Bandes gemäß der Erfindung in einer schematischen Schnittansicht entlang der Querrichtung des Bandes. Das erfindungsgemäße Band nach Fig. 1 weist eine Trägerschicht 1 an einer Bandoberseite, eine Haftkleberbeschichtung 2 der Trägerschicht 1 an der Bandunterseite und eine abziehbare Abdeckfolie 3 an der Bandunterseite auf. Ein erster Faltabschnitt 4 des Bandes ist in Gluerrichtung entlang einer in Längsrichtung des Bandes verlaufenden ersten Faltungskante 5 einmal umgefaltet und ein Teil der Haftkleberbeschichtung 2 ist entlang eines Längsabschnitts des Bandes nicht mit der Abdeckfolie 3 abgedeckt. Das Band kommt somit zumindest im umgefalteten Bereich auf sich selbst zu liegen, d.h. es istaufsich selbst gefaltet. Gemäß Fig. 1 entspricht der Teil der Haftkleberbeschichtung 2, welcher nicht mit der Abdeckfolie 3 abgedeckt ist, dem Bereich des ersten Faltabschnitts 4. Ein erster Schlitz 11 der Abdeckfolie 3 ist in Längsrichtung des Bandes vorgesehen, wobei dieser erste Schlitz 11 nicht mit der ersten Faltungskante 5 zusammenfällt, sondern gemäß Fig. 1 im Wesentlichen mittig auf der Oberseite des gefalteten Bandes gemäß der Erfindung vorhanden ist. Ein Randabschnitt 9 der Abdeckfolie 3 steht über die erste Faltungskante 5 vor und dient damit als Angreifabschnitt zum Abziehen der Abdeckfolie 3.

Ferner sind im nicht umgefalteten Bereich des in Fig. 1 dargestellten erfindungsgemäßen Bandes Perforationsöffnungen 10 vorgesehen, welche sich in einem Randbereich des Bandes durch die Trägerschicht 1, die Haftkleberbeschichtung 2 und die abziehbare Abdeckfolie 3 erstrecken.

Generell sei angemerkt, dass die Darstellung der Fig. 1, wie auch die weiteren Darstellungen, nicht maßstabsgerecht sind und lediglich schematisch den Aufbau und die Gestaltung der Ausführungsformen des erfindungsgemäßen Bandes zeigt. Insbesondere die Dickenverhältnisse der einzelnen Schichten sind nicht maßstabsgerecht wiedergegeben. Allgemein weist das erfindungsgemäße Band bevorzugt eine Breite im nicht gefalteten Zustand von mindestens 3 cm auf. Die Perforationsöffnungen 10 haben einen durchschnittlichen Durchmesser von mindestens 3 mm.

GemäßderinFig.IdargestelltenAusführungsfor m ist das erfindungsgemäße Band so auf sich selbst gefaltet, dass der erste Faltabschnitt 4 die gleiche Breite aufweist wie der nicht gefaltete, in Fig. 1 oben angeordnete, Abschnitt des erfindungsgemäßen Bandes.

Figur 2 zeigt in einer schematischen Querschnittansicht entlang der Querrichtung des erfindungsgemäßen Bandes eine zweite Ausführungsform der Erfindung. In Fig. 2, wie auch in den übrigen Figuren, bezeichnen gleiche Bezugszeichen gleiche Elemente der Erfindung. Die in Figur 2 dargestellte Ausführungsform der Ereindung entspricht im Wesentlichen der in Figur 1 dargestellten Ausführungsform der Erfindung, mit dem Unterschied, dass der erste Faltabschnitt 4 nicht die gleiche Breite aufweist wie der nicht gefaltete Abschnitt. In der in Figur 2 gezeigten Ausführungsform weist der erste Faltabschnitt 4 eine Breite auf, welche in etwa einem Drittel der Breite des nicht gefalteten, in Fig. 2 oben angeordneten, Abschnitts bzw. Bereichs des erfindungsgemäßen Bandes entspricht.

Figur 3 zeigt in einer schematischen Querschnittansicht entlang der Querrichtung des erfindungsgemäßen Bandes eine weitere Ausführungsform der Erfindung. In Fig. 3, wie auch in den übrigen Figuren, bezeichnen gleiche Bezugszeichen gleiche Elemente der Erfindung.

In Fig. 3 ist eine Ausführungsform der Erfindung gezeigt, bei welcher ein erster Faltabschnitt 4 des Bandes in Querrichtung entlang einer in Längsrichtung des Bandes verlaufenden ersten Faltungskante 5 umgefaltet ist und ein zweiter Faltungsabschnitt 6 in Querrichtung entlang einer in Längsrichtung des Bandes verlaufenden zweiten Faltungskante 7 umgefaltet ist. Beide Faltungsabschnitte sind dabei Längsabschnitte des Bandes, welche nicht mit der Abdeckfolie 3 abgedeckt sind. Es handelt sich sowohl beim ersten Faltungsabschnitt 4 als auch beim zweiten Faltungsabschnitt 6 um Randabschnitte des Bandes, welche von ihren Ausmaßen dergestalt ausgewählt sind, dass sie zusammen in etwa der verbleibenden, nicht umgefalteten Breite des selbstklebenden Bandes gemäß der Erfindung entsprechen. Sowohl der erste Faltungsabschnitt als auch der zweite Faltungsabschnitt weisen dabei als Randbereiche des erfindungsgemäßen Bandes eine Breite auf, welche im Wesentlichen einem Viertel der Gesamtbreite des Bandes im ungefalteten Zustand entspricht. Die Abdeckfolie 3 des Bandes weist zwei Randabschnitte 9 der Abdeckfolie 3 auf, welche jeweils über die erste Faltungskante 5 und die zweite Faltungskante 7 vorstehen. Somit werden Angreifabschnitte gebildet, welche das Abziehen der Abdeckfolie 3 ermöglichen. Ein erster Schlitz 11 ist vorgesehen, welcher weder mit der ersten Faltungskante 5 noch mit der zweiten Faltungskante 7 zusammenfällt. Der erste Schlitz 11 ist erfindungsgemäß in etwa in der Mitte des Bandes im gefalteten Zustand angeordnet, er kann sich jedoch generell je nach konkreter Produktgestaltung an jeder anderen Stelle geeigneter Weise befinden.

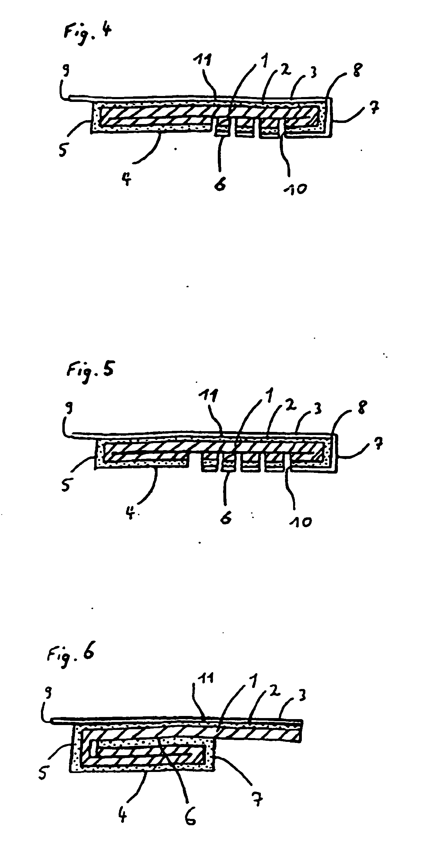

Figur 4 zeigt schematisch eine vierte Ausführungsform des erfindungsgemäßen Bandes im Querschnitt. Im Wesentlichen entspricht die Ausführungsform gemäß Fig. 4 der Ausführungsform der Fig. 3. Der Unterschied besteht darin, dass gemäß Fig. 4 die Abdeckfolie 3 auch den Bereich des zweiten Faltungsabschnitts 6 abdeckt bzw. die dortige Haftkleberbeschichtung 2 abdeckt. Im Bereich des zweiten Faltungsabschnitts 6weist das Band ferner die bereits im Zusammenhang mit Fig. 1 beschriebenen Perforationsöffnungen 10 auf. Zusätzlich vorgesehen ist ein zweiter Schlitz 8 der Abdeckfolie 3, welcher in Längsrichtung des Bandes verläuft und gemäß der in Fig. 4 dargestellten Ausführungsform mit der zweiten Faltungskante 7 zusammenfällt. Somit kann im Bereich des zweiten Faltungsabschnitts 6 die Abdeckfolie 3 entlang des Schlitzes 8 entfernt werden. Die sonstigen Elemente des in Fig. 4 gezeigten Bandes entsprechen den Elementen, wie sie bereits in den anderen Figuren beschrieben worden sind.

Figur 5 zeigt in einer schematischen Querschnittansicht entlang der Querrichtung des erfindungsgemäßen Bandes eine fünfte Ausführungsform der Erfindung. In Fig. 5, wie auch in den übrigen Figuren, bezeichnen gleiche Bezugszeichen gleiche Elemente der Erfindung. Die in Figur 5 dargestellte Ausführungsform der Erfindung entspricht im Wesentlichen der in Figur 4 dargestellten Ausführungsform der Erfindung, mit dem Unterschied, dass dererste Faltabschnitt4 und derzweite Faltabschnitt 6 jeweils nicht die gleiche Breite aufweisen, welche im Wesentlichen einem Viertel der Gesamtbreite des Bandes im ungefalteten Zustand entspricht. In der in Figur 5 gezeigten Ausführungsform weist der erste Faltabschnitt 4 eine bezüglich der Breite des zweiten Faltabschnitts 6 geringere Breite auf, welche bevorzugt in etwa der Hälfte der Breite des zweiten Faltabschnitts 6 entspricht. Die sonstigen Elemente des in Fig. 5 gezeigten Bandes entsprechen den Elementen, wie sie bereits zur Figur 4 beschrieben worden sind.

Figur 6 zeigt eine weitere bevorzugte Ausführungsform des erfindungsgemäßen Bandes in einer schematischen Querschnittdarstellung in Querrichtung des Bandes.

Auch Fig. 6 zeigt eine Ausführungsform des erfindungsgemäßen Bandes, bei welcher sowohl ein erster Faltungsabschnitt 4 als auch ein zweiter Faltungsabschnitt 6 vorgesehen sind. Anders als in den in Fig. 3, 4 und 5 gezeigten Ausführungsformen der Erfindung, sind der erste Faltabschnitt 4 und der zweite Faltabschnitt 6 jedoch nicht gegenüberliegende Randabschnitte des Bandes, sondern der erste Faltabschnitt 4 und der zweite Faltabschnitt 6 grenzen in Querrichtung des Bandes gesehen aneinander an. Ferner ist der zweite Faltabschnitt 6 auf den ersten Faltabschnitt 4 so gefaltet, dass diese aufeinander liegen. Gemäß Fig. 6 weisen sowohl der erste Faltabschnitt 4 als auch der zweite Faltabschnitt 6 keine die Haftkleberbeschichtung 2 abdeckende Abdeckfolie 3 auf. Wie auch in den übrigen dargestellten Ausführungsformen der Erfindung weist die Abdeckfolie 3 des efindungsgemäßen Bandes einen ersten Schlitz 11 auf, welcher nicht mit der ersten Faltungskante 5 und auch nicht mit der zweiten Faltungskante 7 zusammenfällt.

## Patentansprüche

1. Selbstklebendes Band zum Verschließen, Abdichten und Verkleben von Fugen im Hausbau, und insbesondere von Fugen in Ecken und Kanten, mit einer Trägerschicht (1) an der Bandoberseite, einer Haftkleberbeschichtung (2) der Trägerschicht (1) an der Bandunterseite, wobei die Haftkleberbeschichtung (2) keinen nichtklebenden Mittelstreifen aufweist, und mit einer abziehbaren Abdeckfolie (3) an der Bandunterseite, **dadurch gekennzeichnet, dass** zumindest ein erster Faltabschnitt (4) des Bandes in Querrichtung entlang einer in Längsrichtung des Bandes verlaufenden ersten Faltungskante (5) umgefaltet ist, dass mindestens ein Teil der Haftkleberbeschichtung (2) entlang eines Längsabschnitts des Bandes nicht mit der Abdeckfolie (3) abgedeckt ist, und dass das Band in gefaltetem Zustand zu einer KlebebandRolle aufgerollt ist.

2. Band nach Anspruch 1, **dadurch gekennzeichnet, dass** die Haftkleberbeschichtung (2) zumindest im Bereich des ersten Faltabschnitts (4) nicht mit der Abdeckfolie (3) abgedeckt ist.

3. Band nach Anspruch 1 oder 2, **dadurch gekennzeichnet, dass** das Band einen zweiten Faltungsabschnitt (6) aufweist, welcher in Querrichtung entlang einer in Längsrichtung des Bandes verlaufenden zweiten Faltungskante (7) umgefaltet ist.

4. Band nach einem der vorherigen Ansprüche, **dadurch gekennzeichnet, dass** die Abdeckfolie (3) zumindest einen Schlitz (8) in Längsrichtung des Bandes aufweist.

5. Band nach Anspruch 3 und 4, **dadurch gekennzeichnet, dass** die zweite Faltungskante (7) mit dem Schlitz (8) der Abdeckfolie (3) zusammenfällt.

6. Band nach Anspruch 3 und 4, **dadurch gekennzeichnet, dass** die zweite Faltungskante (7) nicht mit dem Schlitz (8) der Abdeckfolie (3) zusammenfällt.

7. Band nach einem der vorherigen Ansprüche oder nach Anspruch 6, **dadurch gekennzeichnet, dass** ein Randabschnitt (9) der Abdeckfolie (3) über die erste Faltungskante (5) und/oder die zweite Faltungskante (7) vorsteht.

8. Band nach einem der Ansprüche 3 bis 7, **dadurch gekennzeichnet, dass** die Haftkleberbeschichtung (2) im Bereich des zweiten Faltabschnitts (6) nicht mit der Abdeckfolie (3) abgedeckt ist.

9. Band nach einem der Ansprüche 3 bis 8, **dadurch gekennzeichnet, dass** der erste Faltabschnitt (4) und der zweite Faltabschnitt (6) jeweils gegenüberliegende Randabschnitte des Bandes sind.

10. Band nach einem der Ansprüche 3 bis 9, **dadurch gekennzeichnet, dass** der erste Faltabschnitt (4) und der zweite Faltabschnitt (6) in Querrichtung des Bandes gesehen aneinander angrenzen.

11. Band nach einem der Ansprüche 3 bis 10, **dadurch gekennzeichnet, dass** der erste Faltabschnitt (4) und der zweite Faltabschnitt (6) zumindest teilweise aufeinanderliegen.

12. Band nach einem der Ansprüche 1 bis 11 oder nach einem der Ansprüche 3 bis 11, **dadurch gekennzeichnet, dass** im Bereich des ersten Faltabschnitts (4) und/oder des zweiten Faltabschnitts (6) Bandunterseite auf Bandunterseite aufeinanderliegt.

13. Band nach einem der Ansprüche 1 bis 11 oder nach einem der Ansprüche 3 bis 11, **dadurch gekennzeichnet, dass** im Bereich des ersten Faltabschnitts (4) und/oder des zweiten Faltabschnitts (6) Bandoberseite auf Bandoberseite aufeinanderliegt.

14. Band nach einem der vorherigen Ansprüche, **dadurch gekennzeichnet, dass** die Trägerschicht (1) aus einem Material aus der Gruppe Papier, Kunststoff, Gewebe, Flies oder einer Kombination zumindest zweier dieser Materialien besteht und die Haftkleberbeschichtung (2) aus der Gruppe selbstklebender Acrylatkleber, Kautschukkleber, Buthylkleber, Hotmelt oder eine Kombination zumindest zweier dieser Kleber ist.

15. Band nach einem der vorherigen Ansprüche, **dadurch gekennzeichnet, dass** zumindest die Trägerschicht (1) so beschaffen ist, dass sie quer zur Längsrichtung des Bandes von Hand reißbar ist.

16. Band nach Anspruch 1, **dadurch gekennzeichnet, dass** mindestens an der Seite der ersten Faltungskante (5) der Rolle eine Zwischenlage vorgesehen ist.

17. Band nach einem der vorherigen Ansprüche, **dadurch gekennzeichnet, dass** es in nicht gefaltetem Zustand mindestens 3 cm breit ist, bevorzugter eine Breite im Bereich von 3 cm bis 50 cm, noch bevorzugter eine Breite im Bereich von 4 cm bis 30 cm und am meisten bevorzugt eine Breite im Bereich von 4,5 cm bis 20 cm aufweist.

18. Band nach einem der vorherigen Ansprüche, **dadurch gekennzeichnet, dass** zumindest ein Perforationsbereich des Bandes Perforationsöffnungen (10) mit einem durchschnittlichen Durchmesser von mindestens 3 Millimetern aufweist.

19. Band nach Anspruch 18, **dadurch gekennzeichnet, dass** die Perforationsöffnungen (10) durch die Trägerschicht (1), die Haftkleberbeschichtung (2) und die abziehbare Abdeckfolie (3) gehen.

20. Band nach Anspruch 18 oder 19, **dadurch gekennzeichnet, dass** die Perforationsöffnungen (10) im Wesentlichen rund, eckig oder oval sind.

21. Band nach einem der vorherigen Ansprüche, **dadurch gekennzeichnet, dass** die Trägerschicht (1) aus einem solchen, insbesondere offenporigen, Material besteht, welches eine gute Hafteigenschaft für Mauerputz aufweist.

## Claims

1. Self-adhesive tape for closing, sealing and adhering joints, for use in house-building, and more especially joints in corners and edges, said tape having a carrier layer (1) on its upper side, an adhesive coating (2) of the carrier layer (1) on its underside, wherein the adhesive coating (2) does not have a non-adhesive central strip, and a removable covering film (3) on its underside, **characterised in that** at least a first fold portion (4) of the tape is folded-over in the transverse direction along a first folding edge (5) extending in the longitudinal direction of the tape, and **in that** at least one part of the adhesive coating (2) along a longitudinal portion of the tape is not covered with the covering film (3), and that the tape is rolled-up in the folded stater the form a roll of adhesive tape.

2. Tape according to claim 1, **characterised in that** the adhesive coating (2), at least in the region of the first fold portion (4), is not covered with the covering film (3).

3. Tape according to claim 1 or 2, **characterised in that** the tape has a second fold portion (6), which is folded-over in the transverse direction along a second folding edge (7) extending in the longitudinal direction of the tape.

4. Tape according to one of the previous claims, **characterised in that** the covering film (3) has at least one slit (8) in the longitudinal direction of the tape.

5. Tape according to claims 3 and 4, **characterised in that** the second folding edge (7) coincides with the slit (8) of the covering film (3).

6. Tape according to claims 3 and 4, **characterised in that** the second folding edge (7) does not coincide with the slit (8) of the covering film (3).

7. Tape according to one of the previous claims or according to claim 6, **characterised in that** an edge portion (9) of the covering film (3) protrudes beyond the first folding edge (5) and/or the second folding edge (7).

8. Tape according to one of claims 3 to 7, **characterised in that** the adhesive coating (2) in the region of the second fold portion (6) is not covered with the covering film (3).

9. Tape according to one of claims 3 to 8, **characterised in that** the first fold portion (4) and the second fold portion (6) are respectively oppositely situated edge portions of the tape.

10. Tape according to one of claims 3 to 9, **characterised in that** the first fold portion (4) and the second fold portion (6) are adjacent each other when viewed with respect to the transverse direction of the tape.

11. Tape according to one of claims 3 to 10, **characterised in that** the first fold portion (4) and the second fold portion (6) lie at least partially on each other.

12. Tape according to one of claims 1 to 11 or according to one of claims 3 to 11, **characterised in that**, in the region of the first fold portion (4) and/or of the second fold portion (6), one tape underside lies on the other tape underside.

13. Tape according to one of claims 1 to 11 or according to one of claims 3 to 11, **characterised in that**, in the region of the first fold portion (4) and/or of the second fold portion (6), one tape upper side lies on the other tape upper side.

14. Tape according to one of the previous claims, **characterised in that** the carrier layer (1) consists of a material selected from the group comprising paper, plastics material, cloth, non-woven fabric or a combination of at least two of these materials, and the adhesive coating (2) is selected from the group comprising self-adhesive acrylate adhesives, rubber adhesives, butyl adhesives, hot-melt adhesives or a combination of at least two of these adhesives.

15. Tape according to one of the previous claims, **characterised in that** at least the carrier layer (1) is produced so that it can be torn by hand transversely relative to the longitudinal direction of the tape.

16. Tape according to claim 1, **characterised in that** an intermediate ply is provided at least on the side of the first folding edge (5) of the roll.

17. Tape according to one of the previous claims, **characterised in that** it is at least 3 cm wide in the non-folded state, and preferably has a width in the range of between 3 cm and 50 cm, more preferably a width in the range of between 4 cm and 30 cm, and most preferably a width in the range of between 4.5 cm and 20 cm.

18. Tape according to one of the previous claims, **characterised in that** at least one perforation region of the tape has perforation openings (10) with a mean diameter of at least 3 millimetres.

19. Tape according to claim 18, **characterised in that** the perforation openings (10) go through the carrier layer (1), the adhesive coating (2) and the removable covering film (3).

20. Tape according to claim 18 or 19, **characterised in that** the perforation openings (10) are substantially round, angular or oval.

21. Tape according to one of the previous claims, **characterised in that** the carrier layer (1) consists of a material, more especially an open-pored material, which has a good adhesive property for plaster.

## Revendications

1. Ruban autocollant pour boucher, étancher et coller des joints, pour une utilisation dans le bâtiment, et en particulier des joints dans des coins et sur des arêtes, avec une couche porteuse (1) sur la face supérieure du ruban, une couche d'adhésif de contact (2) de la couche porteuse (1) sur la sous-face du ruban, dans lequel l'adhésif de contact (2) n'a pas de bande centrale non-adhésive, et un film de protection détachable (3) sur la sous-face du ruban, **caractérisé en ce qu'**au moins une première portion pliée (4) du ruban est repliée dans la direction transversale suivant un premier bord de pliage (5) s'étendant dans la direction longitudinale du ruban, et **en ce que**, le long d'une portion longitudinale du ruban, au moins une partie de la couche d'adhésif de contact (2) n'est pas recouverte par le film de protection (3), et **en ce que** le ruban est enroulé à l'état plié sous la forme d'un rouleau de ruban adhésif.

2. Ruban selon la revendication 1, **caractérisé en ce que**, au moins dans la zone de la première portion pliée (4), la couche d'adhésif de contact (2) n'est pas recouverte par le film de protection (3).

3. Ruban selon la revendication 1 ou 2, **caractérisé en ce que** le ruban comporte une seconde portion pliée (6) qui est repliée dans la direction transversale suivant un second bord de pliage (7) s'étendant dans la direction longitudinale du ruban.

4. Ruban selon une des revendications précédentes, **caractérisé en ce que** le film de protection (3) comporte au moins une fente (8) dans la direction longitudinale du ruban.

5. Ruban selon les revendications 3 et 4, **caractérisé en ce que** le second bord de pliage (7) coïncide avec la fente (8) du film de protection (3).

6. Ruban selon les revendications 3 et 4, **caractérisé en ce que** le second bord de pliage (7) ne coïncide pas avec la fente (8) du film de protection (3).

7. Ruban selon une des revendications précédentes ou selon la revendication 6, **caractérisé en ce qu'**une portion de rive (9) du film de protection (3) dépasse du premier bord de pliage (5) et/ou du second bord de pliage (7).

8. Ruban selon une des revendications 3 à 7, **caractérisé en ce que**, dans la zone de la seconde portion pliée (6), la couche d'adhésif de contact (2) n'est pas recouverte par le film de protection (3).

9. Ruban selon une des revendications 3 à 8, **caractérisé en ce que** la première portion pliée (4) et la seconde portion pliée (6) sont chacune des portions de rive opposées du ruban.

10. Ruban selon une des revendications 3 à 9, **caractérisé en ce que**, vues dans la direction transversale du ruban, la première portion pliée (4) et la seconde portion pliée (6) sont adjacentes l'une à l'autre.

11. Ruban selon une des revendications 3 à 10, **caractérisé en ce que** la première portion pliée (4) et la seconde portion pliée (6) sont au moins partiellement superposées.

12. Ruban selon une des revendications 1 à 11 ou selon une des revendications 3 à 11, **caractérisé en ce que**, dans la zone de la première portion pliée (4) et/ou de la seconde portion pliée (6), la sous-face du ruban est appliquée contre elle-même.

13. Ruban selon une des revendications 1 à 11 ou selon une des revendications 3 à 11, **caractérisé en ce que**, dans la zone de la première portion pliée (4) et/ou de la seconde portion pliée (6), la face supérieure du ruban est appliquée contre elle-même.

14. Ruban selon une des revendications précédentes, **caractérisé en ce que** la couche porteuse (1) est constituée d'un matériau provenant du groupe comprenant papier, matière plastique, tissu, non-tissé ou d'une combinaison d'au moins deux de ces matériaux, et la couche d'adhésif de contact (2) provient du groupe comprenant adhésif acrylate autocollant, adhésif au caoutchouc, adhésif au butyle, adhésif thermo fusible ou est une combinaison d'au moins deux de ces adhésifs.

15. Ruban selon une des revendications précédentes, **caractérisé en ce qu'**au moins la couche porteuse (1) est conçue de façon à pouvoir être arrachée manuellement transversalement à la direction longitudinale du ruban.

16. Ruban selon la revendication 1, **caractérisé en ce qu'**une couche intermédiaire est prévue au moins sur le côté du premier bord de pliage (5) du rouleau.

17. Ruban selon une des revendications précédentes, **caractérisé en ce qu'**à l'état non plié il a une largeur d'au moins 3 cm, préférentiellement une largeur comprise entre 3 cm et 50 cm, plus préférentiellement une largeur comprise entre 4 cm et 30 cm et le plus préférentiellement une largeur comprise entre 4,5 cm et 20 cm.

18. Ruban selon une des revendications précédentes, **caractérisé en ce qu'**au moins une zone perforée du ruban comporte des orifices perforés (10) d'un diamètre moyen d'au moins 3 millimètres.

19. Ruban selon la revendication 18, **caractérisé en ce que** les orifices perforés (10) traversent la couche porteuse (1), la couche d'adhésif de contact (2) et le film de protection détachable (3).

20. Ruban selon la revendication 18 ou 19, **caractérisé en ce que** les orifices perforés (10) sont sensiblement ronds, polygonaux ou ovales.

21. Ruban selon une des revendications précédentes, **caractérisé en ce que** la couche porteuse (1) est constituée d'un matériau; en particulier à pores ouverts, qui possède une bonne adhérence sur de l'enduit mural.
